# EUROPEAN PATENT APPLICATION

(11) **EP 2 128 365 A2**
(43) Date of publication of application: **02.12.2009**
(21) Application number: 09250734.2
(22) Date of filing: 16.03.2009
(51) Int. Cl.: E05D 7/04, E05D 5/02

(54) **Fitting for panels**

(30) Priority: 29.05.2008 GB 0809784
(71) Applicant: Optima Contracting Limited, High Wycombe HP11 1BS (GB)
(72) Inventor: Charlton, John, Tarporley, Cheshire CW6 9TE (GB)
(74) Representative: Burt, Matthew Thomas

(57) **Abstract**

A fitting for a panel, for example of toughened and/or laminated glass, comprising first and second mounting holes. The fitting comprises first and second mounting portions arranged to be disposed within the first and second mounting holes respectively, and first and second eccentric bushes located over the first and second mounting portions respectively. Each eccentric bush defines an interior circle in contact with the exterior of its respective mounting portion, and an exterior circle in contact with the interior of its respective mounting hole. The centre of the interior circle of each eccentric bush is offset from the centre of the exterior circle of that eccentric bush, so that each eccentric bush can be rotated with respect to its respective mounting hole and mounting portion to change the position of the mounting portion within the mounting hole.

## Description

The present invention relates to fittings for panels. The present invention is particularly suited to fittings for glass panels, for example lock/latch assemblies and hinges for glass doors and partitions.

Toughened and/or laminated glass is becoming increasingly popular, particularly in office environments, as a material for doors, partitions and the like. Glass requires specialist processing to cut to size, drill, polish and temper and/or laminate, and so it is not practical for glass to be prepared on the site where it is to be fitted. Instead, the toughened and/or laminated glass doors, partitions and the like are supplied by specialist glass processors to the required dimensions with any holes necessary for fittings already provided.

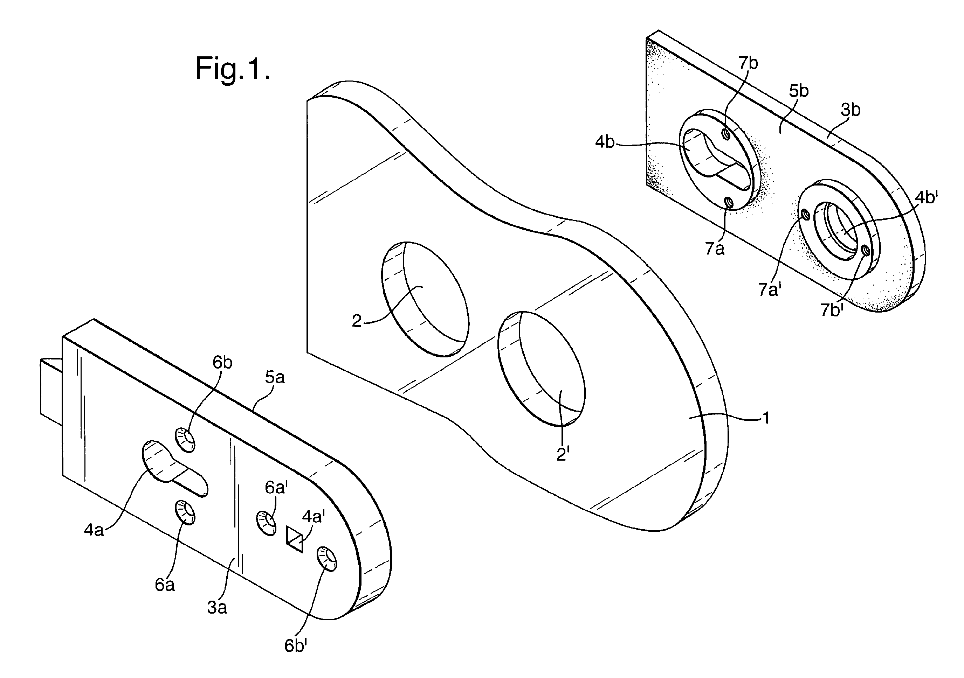

Figure 1 is an exploded diagram of a portion of a known glass door with a lock/latch assembly. The glass door comprises a glass panel 1 with two pre-formed holes 2 and 2'. The centre of the first hole 2 is 62mm from the edge of the glass panel 1, and the centres of the holes 2 and 2' are 60mm apart. (So the centre of the second hole 2' is 122mm from the edge of the glass panel 1.) Each hole has a diameter of 45mm. (These dimensions are by way of example only.)

The lock/latch assembly comprises a first part 3a and a second part 3b. The second part 3b comprises raised portions 4b and 4b' with fitting holes for a lock portion and a handle portion (the lock portion and handle portion are not shown). The raised portions 4b and 4b' are circular, and have an exterior diameter of 38mm. The centres of the raised portions 4b and 4b' are 60mm apart. The first part 3a has corresponding portions 4a and 4a' with fitting holes for the lock and handle; however, the portions 4a and 4a' are not raised.

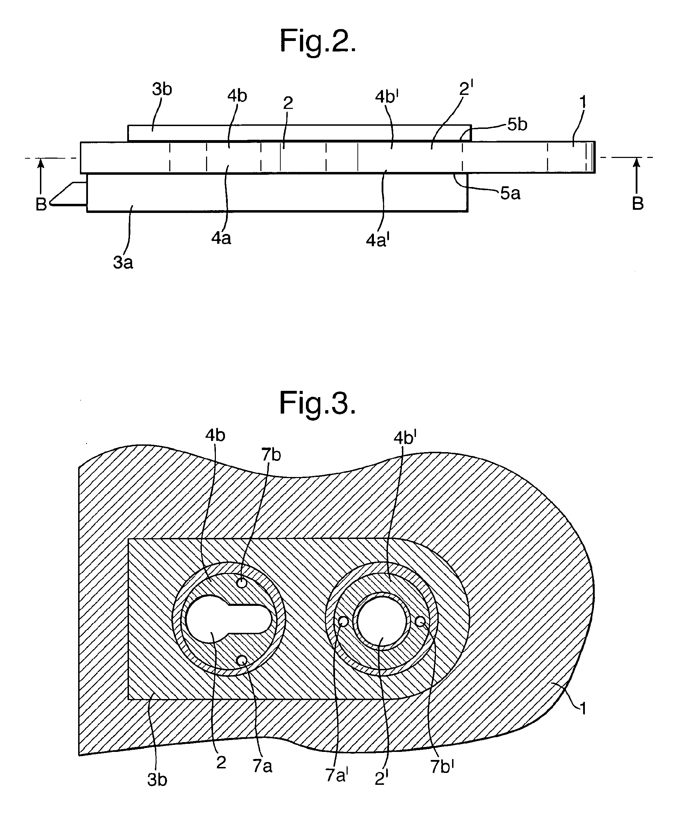

The assembled glass door is shown in Figures 2 and 3. The first part 3a and second part 3b are mounted on opposite sides of the panel 1, with rubber portions 5a and 5b being positioned between the panel 1 and the first and second parts 3a and 3b respectively. The raised portions 4b and 4b' of the second part 3b are positioned within the holes 2 and 2' respectively, and the first part 3a is positioned so that the portions 4a and 4a' are opposite the raised portions 4b and 4b' respectively. The first and second parts 3a and 3b are held together by screws (not shown) that pass through receiving holes 6a, 6b, 6a' and 6b' in the first part 3a, through the holes 2 and 2', and engage with threaded holes 7a, 7b, 7a' and 7b' respectively in the raised portions 4b and 4b' of the second part 3b. The first and second parts 3a and 3b are kept in place relative to the glass panel 1 by the friction between the rubber portions 5a and 5b and the glass panel 1.

As the raised portions 4b and 4b' have an exterior diameter of 38mm, compared to the larger diameter of 45mm of the holes 2 and 2', the position of the lock/latch assembly relative to the glass panel 1 can be changed. This is necessary so that the lock/latch assembly can be positioned correctly, for example to ensure that the latch of the lock/latch assembly is able to engage with the latch hole in an adjacent partition. Once the correct position for the lock latch assembly has been achieved, the lock/latch assembly is fixed in place by tightening the screws holding the first and second parts 3a and 3b together.

However, a disadvantage of this is that the lock/latch assembly can over time move relative to the glass panel 1, in particular due to the repeated turning force exerted on the door handle when it is opened and closed. This causes the lock/latch assembly to be no longer positioned correctly.
One method used to mitigate the movement of the lock/latch assembly is to increase the tightness with which the first and second parts 3a and 3b are screwed together, in order to increase the friction between the rubber portions 5a and 5b and the glass panel. However a disadvantage of this is that it risks damaging the lock/latch assembly and/or the glass panel, and also it is common for the screws to loosen over time.

It would be desirable to provide a fitting the position of which relative to the panel could be changed, but which would not move over time relative to the glass panel. It would also be desirable to provide a system whereby the first and second parts 3a and 3b of the lock/latch assembly did not have to be screwed so tightly together, so mitigating the risk of damaging the lock/latch assembly and/or the glass panel.

In accordance with a first aspect of the present invention, there is provided a fitting for a panel comprising first and second mounting holes, the fitting comprising:
first and second mounting portions arranged to be disposed within the first and second mounting holes respectively;
first and second eccentric bushes located over the first and second mounting portions respectively;
wherein:
each eccentric bush defines an interior circle in contact with the exterior of its respective mounting portion, and an exterior circle in contact with the interior of its respective mounting hole;
the centre of the interior circle of each eccentric bush is offset from the centre of the exterior circle of that eccentric bush;
and wherein each eccentric bush can be rotated with respect to its respective mounting hole and mounting portion to change the position of the mounting portion within the mounting hole.

As each eccentric bush defines an interior circle in contact with the exterior of its respective mounting portion, and an exterior circle in contact with the interior of its respective mounting hole, each eccentric bush acts to keep its respective mounting portion in place within its respective mounting hole. However, as the centre of the interior circle of each eccentric bush is offset from the centre of its exterior circle, if the eccentric bushes are rotated then the mounting portions will move within the mounting holes. Thus the fitting can be correctly positioned with respect to the panel by rotating eccentric bushes, but once positioned the eccentric bushes prevent the fitting from moving out of position during use.

The fitting may comprise a first body part comprising the first and second mounting portions. In that case, the first and second mounting portions are advantageously raised circular parts of the single body portion. Alternatively, the first and second mounting portions may comprise pins.

Alternatively, the first and second mounting portions may be shafts or stops.

Advantageously, each eccentric bush has a circular interior. However, eccentric bushes with differently shaped exteriors, such as scalloped exteriors, may be used. Advantageously, each eccentric bush has a circular exterior. However, eccentric bushes with differently shaped exteriors, such as scalloped or triangular exteriors, may be used. In some cases a non-circular interior or exterior may be desirable, as it reduces the friction between the eccentric bush and the mounting portion or mounting hole, making it easier to rotate the eccentric bush when positioning the fitting relative to the panel when it is being fitted. In other cases the larger amount of friction may be desirable, to ensure the eccentric bush does not move during use.

Preferably, the fitting further comprises at least one rubber portion positioned between the fitting and the panel. This helps provide a good contact between the fitting and the panel, and helps prevent the fitting and/or the panel being damaged.

The fitting may be a lock/latch assembly.
Alternatively, the fitting may be a hinge or pivot assembly.

The panel may comprise toughened and/or laminated glass.

There will now be described embodiments of the invention, with reference to the accompanying drawings of which:
Figure 1 is an exploded diagram a portion of a known glass door with a lock/latch assembly;
Figure 2 is a cross-section of the portion of the glass door of Figure 1;
Figure 3 is a cross-section through the line B-B of Figure 2;
Figure 4 is an exploded diagram of a glass door with a lock/latch assembly in accordance with a first embodiment of the present invention;
Figure 5 is a second exploded diagram of the glass door of Figure 4;
Figure 6 is a third exploded diagram of the glass door of Figure 4;
Figure 7 is a cross-section of the glass door of Figure 4;
Figure 8 is a cross-section through the line A-A of Figure 7;
Figure 9 is an exploded diagram of a glass door with a pivot assembly in accordance with a second embodiment of the present invention;
Figure 10 is a cross-section through the glass door of Figure 9;
Figure 11 is a cross-section through the line A-A of Figure 10;
Figure 12 is a cross-section through the line B-B of Figure 11;
Figure 13 is a door fitting in accordance with a third embodiment of the present invention;
Figure 14a is an eccentric bush in accordance with the invention;
Figure 14b is a further eccentric bush in accordance with the invention.

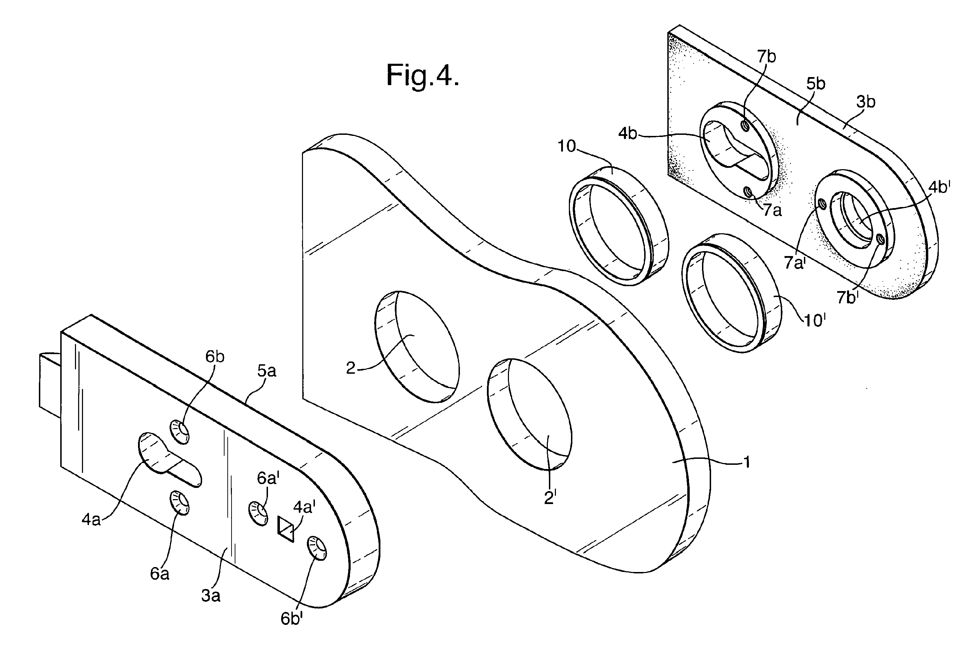

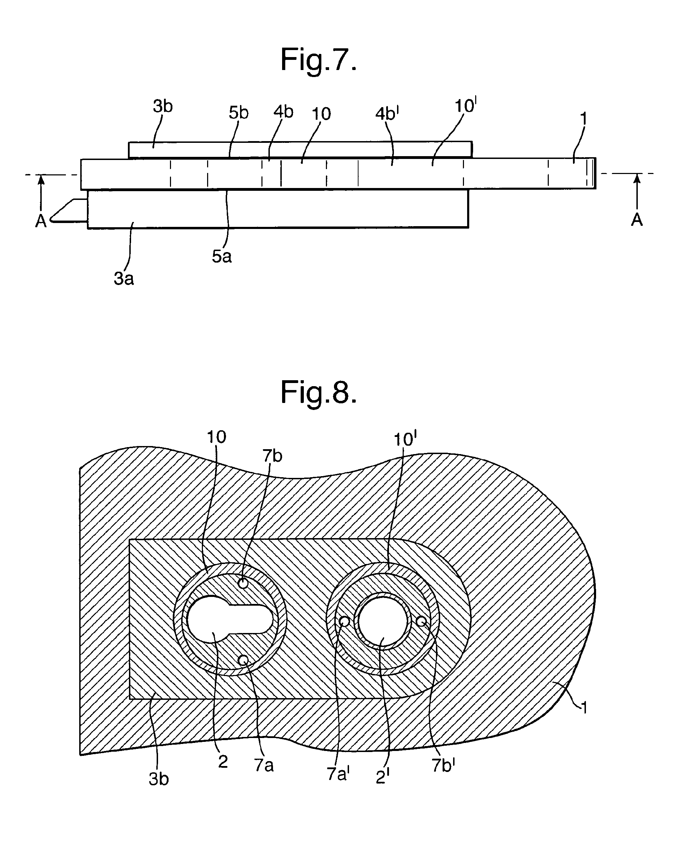

Figures 4, 5 and 6 are exploded diagrams of a portion of a glass door with a lock/latch assembly in accordance with a first embodiment of the present invention, and Figures 7 and 8 show the glass door when assembled. As before, the glass door comprises a glass panel 1 with two pre-formed holes 2 and 2' with the same standardised positions and dimensions, and a lock/latch assembly comprises a first part 3a and a second part 3b, the second part 3b comprising raised portions 4b and 4b'.

In accordance with the present embodiment, eccentric bushes 10 and 10' are provided. The bushes 10 and 10' are circular rings of a plastics material such as nylon, with an outer diameter of 45mm to match the inner diameter of the pre-formed holes 2 and 2' of the glass panel 1, and an inner diameter of 38mm to match the outer diameter of the raised portions 4b and 4b' of the second part 3b. (As the dimensions of the pre-formed holes 2 and 2' and raised portions 4b and 4b' are by way of example only, so are the corresponding dimensions of the eccentric bushes 10 and 10'.) However, the centre of the circle defined by the hole in the middle of each ring is offset from the centre of the circle defined by the exterior of the ring, so that the thickness of the bush varies around its circumference. For example, the centre of the hole could be offset by a distance of 3mm, in which case the thickness of the bush would vary from a minimum of 2.5mm to a maximum of 8.5mm.

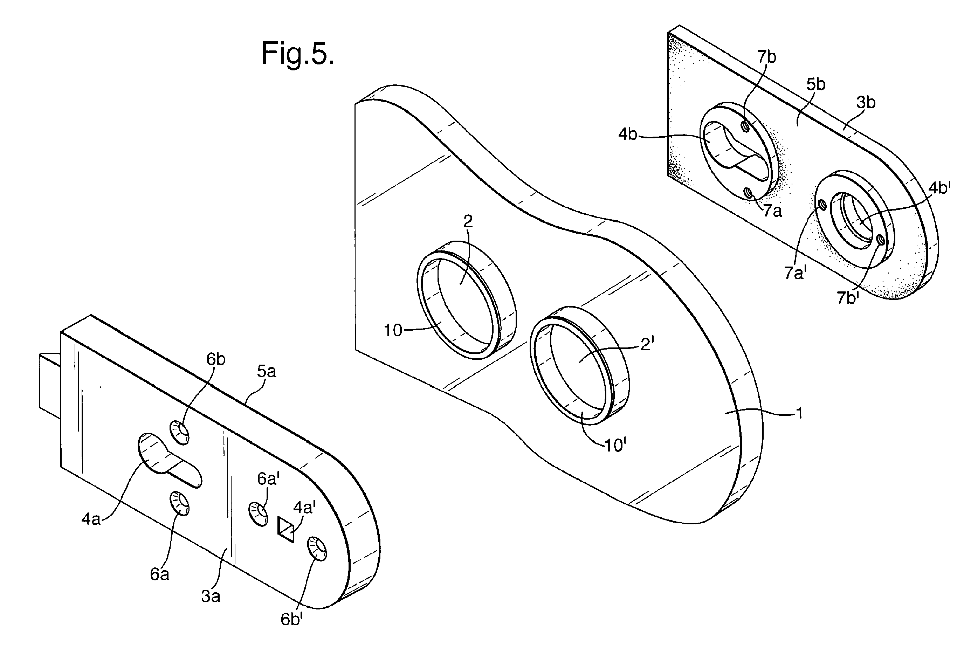

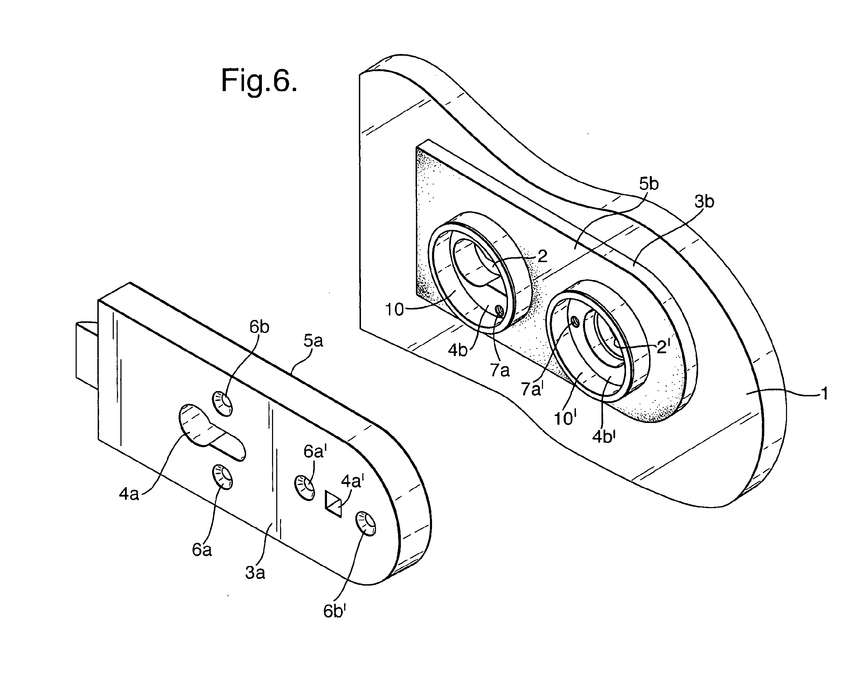

As shown in Figure 5, the eccentric bushes 10 and 10' are located in the holes 2 and 2' respectively, and then as shown in Figure 6 the raised parts 4b and 4b' of the second part 3b are located within the holes of the eccentric bushes 10 and 10'. The position of the second part 3b relative to the glass panel 1 can then be changed by rotating the eccentric bushes 10 and 10'. (In practice it is likely that the correct position for the second part 3b would be achieved while only one of the eccentric bushes 10 and 10' was in place, with the other eccentric bush then being put in place to "fix" the position of the second part 3b.) Once second part 3b is in the correct position, the lock/latch assembly is assembled by screwing the first part 3a to the second part 3b.

As will be appreciated, the eccentric bushes 10 and 10' act to keep the second part 3b in position relative to the glass panel 1. This is because the exterior diameter of the eccentric bushes 10 and 10' is the same as the interior diameter of the holes 2 and 2', so the eccentric bushes fit tightly within the holes; and similarly the exterior diameter of the raised parts 4b and 4b' is the same as the interior diameter of the eccentric bushes 10 and 10', so the raised parts fit tightly within the eccentric bushes. Therefore the only way in which the lock/latch assembly could move relative to the glass panel 1 would be if the eccentric bushes were rotated simultaneously in the respective holes, but this will not occur as a result of the forces that will be applied to the door handle during its use.

Further, it will be appreciated that the parts 3a and 3b do not need to be screwed as tightly together, as the lock/latch assembly is no longer kept in place solely as a result of the friction between the rubber portions 5a and 5b and the glass panel 1.

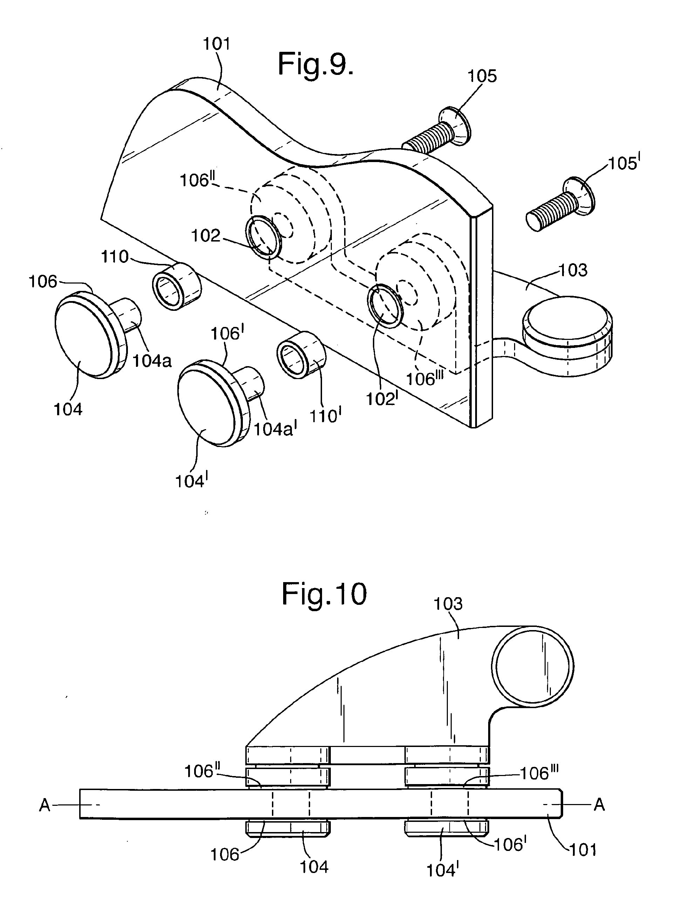

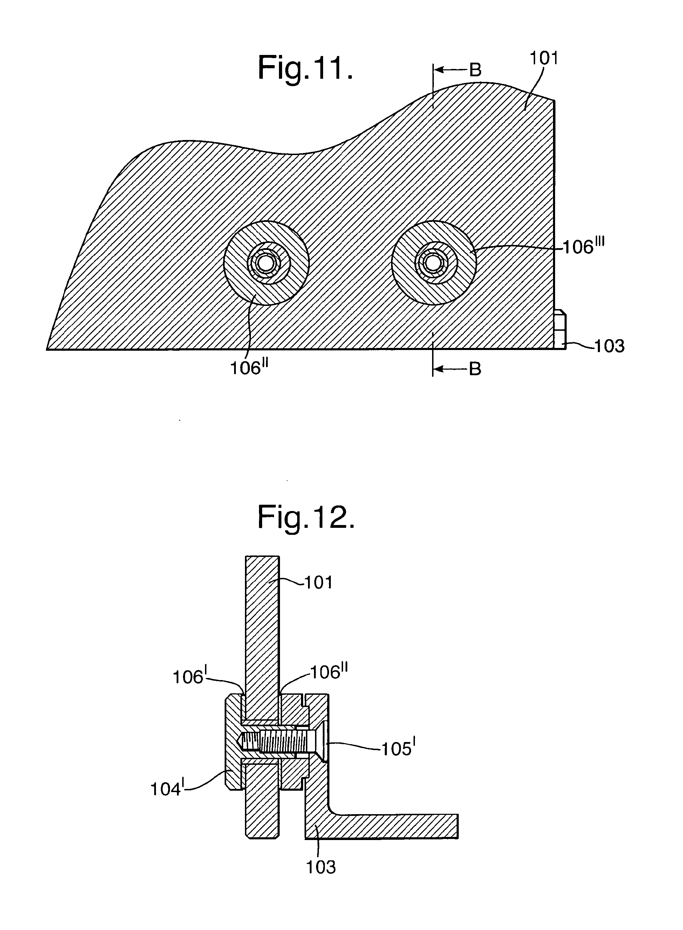

Figures 9 to 12 show a portion of a glass door with a pivot assembly in accordance with a second embodiment of the present invention. The glass door comprises a glass panel 101 with holes 102 and 102'. The pivot assembly comprises a first part 103 which is positioned on one side of the glass panel 1, and attached to two stops 104 and 104' positioned on the opposite side of the glass panel 1 by means of screws 105 and 105' that pass through the holes 102 and 102' respectively. Rubber washers 106, 106', 106" and 106''' are positioned between the first part 103, the stops 104 and 104' and the glass panel 1.

The stops 104 and 104' have shafts 104a and 104a' respectively, which extend into the holes 102 and 102' respectively. As in the previous embodiment, the exterior diameter of the shafts is less than the interior diameter of the holes. Again as in the previous embodiment, eccentric bushes 110 and 110' are provided. The eccentric bushes 110 and 110' have an exterior diameter equal to the interior diameter of the holes 102 and 102', and an interior diameter equal to the exterior diameter of the shafts 104a and 104a'. Thus, as in the previous embodiment, the position of the pivot assembly relative to the glass panel can be changed by rotating the eccentric bushes within the holes, but the bushes act to keep the pivot assembly in position relative to the glass panel when in use.

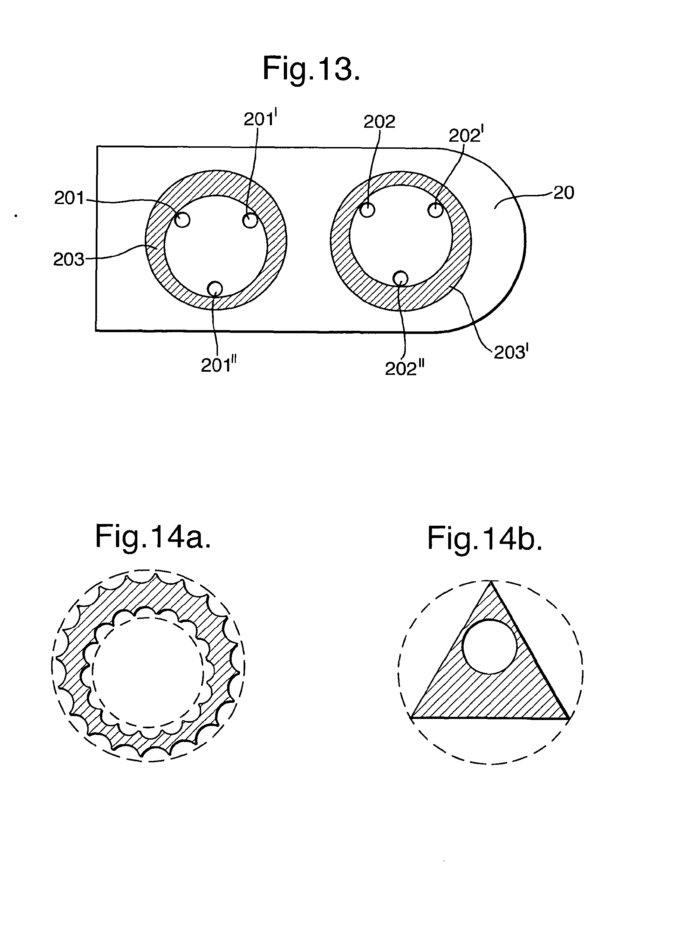

It will be appreciated that the invention applies equally to any fitting (such as a lock/latch assembly or pivot assembly) in which the eccentric bushes are able to rotate relative to fixed centres defined by parts of the fitting, such as the exteriors of the raised portions 4b and 4b' of the first embodiment, and the exteriors of the shafts 104a and 104a' of the stops 104 and 104' of the second embodiment. Figure 13 shows a door fitting according to a third embodiment of the present invention. The door fitting 200 comprises two sets of three pins 201, 201' and 201", and 202, 202' and 202''. As shown, each set of three pins defines a circle of diameter equal to the interior diameter of the eccentric bushes 203 and 203'. Thus the eccentric bushes can be used to position the door fitting 200 relative to a glass panel as in the previous embodiments.

It will also be appreciated that the invention applies equally to eccentric bushes that do not have circular interiors or exteriors. For example, the first and second embodiments could equally be used with eccentric bushes with scalloped interiors and exteriors as shown in Figure 14a, or that comprise a triangle with an offset circular hole as shown in Figure 14b.

## Claims

1. A fitting for a panel comprising first and second mounting holes, the fitting comprising:
first and second mounting portions arranged to be disposed within the first and second mounting holes respectively;
first and second eccentric bushes located over the first and second mounting portions respectively;
wherein:
each eccentric bush defines an interior circle in contact with the exterior of its respective mounting portion, and an exterior circle in contact with the interior of its respective mounting hole;
the centre of the interior circle of each eccentric bush is offset from the centre of the exterior circle of that eccentric bush;
and wherein each eccentric bush can be rotated with respect to its respective mounting hole and mounting portion to change the position of the mounting portion within the mounting hole.

2. A fitting as claimed in claim 1, wherein the fitting comprises a first body part comprising the first and second mounting portions.

3. A fitting as claimed in claim 2, wherein the first and second mounting portions are raised circular parts of the single body portion.

4. A fitting as claimed in claim 2, wherein the first and second mounting portions each comprise pins.

5. A fitting as claimed in claim 1, wherein the first and second mounting portions are shafts of stops.

6. A fitting as claimed in any preceding claim, wherein each eccentric bush has a circular interior.

7. A fitting as claimed in any preceding claim, wherein each eccentric bush has a circular exterior.

8. A fitting as claimed in any preceding claim, further comprising at least one rubber portion positioned between the fitting and the panel.

9. A fitting as claimed in any preceding claim, wherein the fitting is a lock/latch assembly.

10. A fitting as claimed in any of claims 1 to 7, wherein the fitting is a hinge or pivot assembly.

11. A fitting as claimed in any preceding claim, wherein the panel comprises toughened and/or laminated glass.
